# EUROPEAN PATENT SPECIFICATION

(11) **EP 4 412 398 B1**
(45) Date of publication and mention of the grant of the patent: **29.07.2026**
(21) Application number: 22876610.1
(22) Date of filing: 07.06.2022
(51) Int. Cl.: H05B 6/12, H05B 6/06, H04W 12/04, H04W 4/80, A47J 36/32

(54) **BUILT-IN INDUCTION SYSTEM WITH ENHANCED SAFETY VIA SMART PAD**
EINGEBAUTES INDUKTIONSSYSTEM MIT ERHÖHTER SICHERHEIT ÜBER EIN INTELLIGENTES PAD
SYSTÈME D'INDUCTION INTÉGRÉ À SÉCURITÉ RENFORCÉE PAR UN BLOC INTELLIGENT

(30) Priority: 01.10.2021 KR 20210130801
(43) Date of publication of application: 07.08.2024
(73) Proprietor: Peaceworld.Co., Ltd, Hanam-si, Gyeonggi-do 13026 (KR)
(72) Inventor: LEE, Myung Ock, Seongnam-si, Gyeonggi-do 13643 (KR); KIM, Sang Woo, Seongnam-si, Gyeonggi-do 13643 (KR)
(74) Representative: Frenkel, Matthias Alexander
(86) International application number: PCT/KR2022/007966
(87) International publication number: WO 2023/054835

(56) References cited:
- JP-A- S63 269 487
- KR-A- 20160 012 966
- KR-A- 20170 035 852
- KR-A- 20170 035 852
- KR-B1- 101 589 701
- KR-B1- 101 612 543
- KR-B1- 102 147 659
- US-A1- 2020 296 806
- US-B2- 10 932 330
- US-B2- 11 045 043

## Description

### TECHNICAL FIELD

The present invention relates to an induction cooking system and, more specifically, to an under-induction cooking system which can accurately match a pad and an induction cooker, used as one set, and, simultaneously, ensure safety in use by multiple ways.

### BACKGROUND

Heating devices for cooking food, such as a microwave oven, a gas stove, an oven, and the like, have been used. Recently, an induction cooker has been increasingly used to address issues, such as indoor air pollution, increase in room temperature, etc. As a cooking appliance that adopts a heating method of electromagnetic induction, the induction cooker is advantageous in many aspects, such as in high energy efficiency and stability. Also, the induction cooker provides benefits in that the induction cooker rarely consumes oxygen and does not emit waste gas. In such an induction cooker, lines of magnetic force produced when a high-frequency current is applied pass through a bottom of an induction cooking container laid on a top plate of the induction cooker, at which point an eddy current generated by a resistance component only heats the induction cooking container.

Since the range affected by the magnetic field created in the induction cooker is relatively limited, an induction cooking container is placed directly on a top plate of the induction cooker for use. However, the induction cooker may be installed under a table (so-called under-induction cooker) to avoid contamination or damage caused by remaining food, etc. Under this circumstance, a separate pad communicating with the induction cooker may be used to protect a top surface of the table or the user's safety. When multiple induction cookers are placed in a large space, it may be difficult to pair pads to their respective induction cookers. Moreover, as the under-induction cooker is not externally exposed, a possibility of fire due to mishandling by the user can be high.

US 10932330 B2 discloses a device to support a cooking container for a smart under range being installed under a lower surface of a table, comprising: a body pad placed on an upper surface of the table under which a smart under range induction is installed, having an upper part on which a cooking container heated by means of the smart under range is placed and provided with a floor part concavely depressed from the upper part; a cooking container supporting part provided on an upper surface of the floor part of the body pad; a temperature sensing part interposed between the upper surface of the floor part of the body pad and the cooking container supporting part and disposed below a center part of the cooking container supporting part to directly sense a temperature of the cooking container; a transmitting circuit part provided inside the body pad and connected to the temperature sensing part for transmitting a result sensed by the temperature sensing part to an outside; and a power supply part provided inside the body pad for supplying power to the transmitting circuit part, wherein the body pad is formed by insulating material, the cooking container supporting part is formed by glass-ceramic, the transmitting circuit part includes a microcomputer configured inside in the form of a PCB circuit and receiving and sending out the temperature sensed at a certain time interval by the temperature sensing part from the time when the temperature sensed by the temperature sensing part reaches an operating setting temperature, the transmitting circuit part being protected inside the body pad by a magnetic field shielding means, and the transmitting circuit part includes a location sensing part sensing whether the cooking container placed on the body pad is in a right position for heating at the upper surface ofthe table under which the smart under range induction is installed and conveying a sensing result to the microcomputer, wherein the transmitting circuit part starts to operate when the location sensing part determines that the body pad is placed in the right position for heating, and an alarm goes off if the location sensing part determines that the body pad is not placed in the right position for heating.

JP S63269487 A discloses a table with a switching means for controlling drive of an induction heating device. The table is put on the surface of a top plate, and subject matter is put on it. When the switch of a manual switch means in the table is put on, a generating device assembled in it gets on, and the signal is received by a receiving device, so as to actuate an induction heating device. Lines of magnetic force generated from an induction heating coil start heating the subject matter, and heat is duly conveyed to the table, and then to the surface material of the top plate. It is possible, therefore, to direct a switch part in any direction, and operability is improved, while at the same time appearance becomes better since use without a table is impossible, where damage and scorching of a top plate caused by directly putting a pot on the top plate can be prevented.

### SUMMARY

Embodiments of the present invention have been made in an effort to solve the above-mentioned problems.

An objective of the present invention is to provide an under-induction cooking system having enhanced safety using a smart pad where induction cookers, each of which installed under a top plate of a table, may accurately and easily match one-to-one with their respective pads to form a pair.

Moreover, an objective of the present invention is to provide an under-induction cooking system having enhanced safety using a smart pad where extended functions of an induction cooker and a pad can ensure multiple levels of safety in using the induction cooker, thereby preventing an accident, such as fire caused by the induction cooker, in advance.

Further, an objective of the present invention is to provide an under-induction cooking system having enhanced safety using a smart pad, in which an induction cooker may be controlled in diverse ways using a pad usable with the induction cooker.

As defined in the claims, an under-induction cooking system having enhanced safety using a smart pad comprises one or more tables disposed in a space, wherein each table includes a top plate configured to transmit a magnetic field; one or more induction units fixed under each table, wherein each induction unit is configured to heat a designated container disposed above the top plate; and one or more pads, wherein each pad includes a sender transmitting a radio frequency (RF) signal, wherein the number of pads correspond to the number of induction units such that the pads are paired with the respective induction units. Each induction unit includes a first identifier, wherein a unique first key data is set and stored in the first identifier to identify each induction unit; a controller generating a control signal which controls the induction unit; and a receiver electrically connected to the controller and receiving the RF signal. The pad includes a support portion including a magnet portion disposed at a center of the magnet portion and a second sensor portion exposed to an upper side of the support portion and measuring a temperature of the designated container, the induction unit includes a first sensor portion detecting a magnetic field generated by the magnet portion, the pad includes a second identifier, wherein a second key data that matches one-to-one with the first key data is set and stored in the second identifier, the receiver is configured to receive only the RF signal transmitted from the one pad paired with the induction unit as a set, a detection area is arranged in a preset area of an upper surface of the top plate, wherein the controller includes a matching confirmation portion checking whether the pad is positioned within the detection area, a switching area is arranged in a preset area of an upper surface of the top plate, wherein, when the pad is disposed on the top plate such that the magnet portion is placed within the switching area, a mode change portion of the controller is configured to change a mode of the induction unit from a stand-by mode to a heating mode, the detection area is defined as a maximum area where the induction unit is capable of detecting presence of the pad when the pad is placed on the top plate of the table, wherein the switching area is positioned within the detection area, and, in response to determining that a temperature measured by the pad that matches one-to-one with the first key data is not greater than a preset first temperature within a preset second limit time elapsed from a first time point when the mode of the induction unit changes from the stand-by mode to the heating mode, a matching reconfirmation portion of the controller is configured to cancel the heating mode.

In an embodiment, the pad may include a main body portion extending to one side of the support portion from the support portion and including a printed circuit board electrically connected to the second sensor portion.

As defined in the claims, the induction unit includes a first sensor portion detecting a magnetic field generated by the magnet portion.

In an embodiment, the first key data may be any one of a mark, character, geometric form, and a combination thereof. The first key data may be visually displayed. As defined in the claims, the pad includes a second identifier, wherein a second key data that matches one-to-one with the first key data is set and stored in the second identifier.

As defined in the claims, a detection area is arranged in a preset area of an upper surface of the top plate, and the controller may include a matching confirmation portion checking whether the pad is positioned within the detection area.

In an embodiment, in a state where the one or more induction units are all turned on, when a first induction unit of the one or more induction units receives the second key data, the matching confirmation portion included in the first induction unit which has received the second key data may be configured to check whether the pad which has sent the second key data is positioned in the detection area within a preset first limit time.

As defined in the claims, a switching area is arranged in a preset area of an upper surface of the top plate. When the pad is disposed on the top plate such that the magnet portion is placed within the switching area, a mode change portion of the controller may be configured to change a mode of the induction unit from a stand-by mode to a heating mode.

As defined in the claims, in response to determining that a temperature measured by the pad that matches one-to-one with the first key data is not greater than a preset first temperature within a preset second limit time elapsed from a first time point when the mode of the induction unit changes from the stand-by mode to the heating mode, a matching reconfirmation portion of the controller is configured to cancel the heating mode.

In an embodiment, the controller may include a container overheating monitoring portion monitoring whether a temperature measured by the pad that matches one-to-one with the first key data exceeds a preset second temperature to determine overheating of the designated container.

In an embodiment, the controller may be configured to cancel the heating mode and change the heating mode to the OFF mode, in response to determining that the temperature measured by the pad that matches one-to-one with the first key data exceeds the second temperature.

According to the above-described features of the present invention, various effects including the following may be expected. However, the present invention can function without providing all the effects described below.

In an under-induction cooking system having enhanced safety using a smart pad according to one embodiment of the present invention, induction cookers, each of which installed under a top plate of a table, may accurately and easily match one-to-one with their respective pads to form a pair.

In addition, according to the present invention, extended functions of an induction cooker and a pad can ensure multiple levels of safety in using the induction cooker, thereby preventing an accident, such as fire caused by the induction cooker, in advance.

Furthermore, according to the present invention, an induction cooker may be controlled in diverse ways using a pad usable with the induction cooker.

### BRIEF DESCRIPTION OF THE DRAWINGS

FIG. 1 is a block diagram of an under-induction cooking system according to an embodiment of the present invention;
FIG. 2 shows a process of switching modes between an OFF mode, stand-by mode, and heating mode of an induction unit;
FIG. 3 shows induction units matching one-to-one with the respective pads of the induction units;
FIG. 4 shows a schematic structure of an under-induction cooking system according to an embodiment of the present invention;
FIG. 5 shows a state where the pad of FIG. 4 is disposed within a detection area;
FIG. 6 shows a state where the pad of FIG. 4 is disposed within a switching area;
FIG. 7 is a perspective view of the pad of FIG. 4; and
FIG. 8 is a plan view of FIG. 7.

### DETAILED DESCRIPTION OF ILLUSTRATIVE EMBODIMENTS

Example embodiments of the present disclosure are described with reference to the appended drawings to enable a sufficient understanding about elements and effects of the present disclosure. However, the present disclosure is not limited to the disclosed embodiments below. Various forms may be obtained, and various modifications can be applied. Below, in describing the present invention, explanation on related known functions may be omitted if it is determined that the known functions are well-known to one having ordinary skill in the art and may obscure essence of the present invention.

Terms, such as "first," "second," etc., may be used herein to describe various elements. However, the elements should not be understood as being limited by these terms. These terms may be only used in distinguishing one element from another. For example, a first element may be referred to as a second element, and, similarly, a second element may be referred to as a first element, within the scope of the present disclosure.

Herein, terms, such as "comprise," "include," "have," etc., are designed to indicate features, numbers, steps, operations, elements, components, or a combination thereof are present. It should be understood that presence of one or more other features, numbers, steps, operations, elements, components, or a combination thereof or a possibility of addition thereof are not excluded.

Terms used herein are only to explain certain embodiments but not to limit the present invention. A singular representation may include a plural representation unless a clearly different meaning can be grasped from the context. Unless defined differently, terms used in embodiments of the present disclosure may be interpreted as generally known terms to one having ordinary skill in the art.

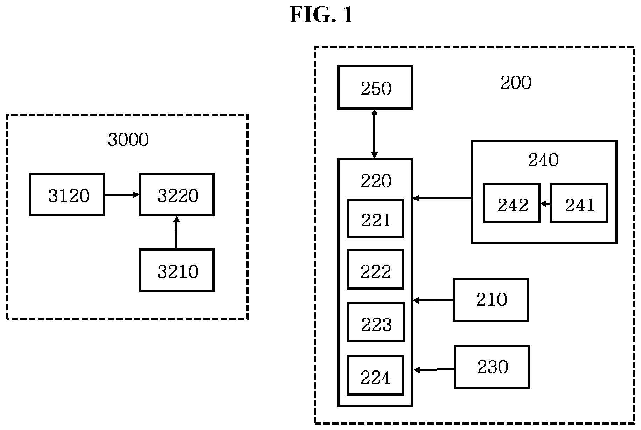

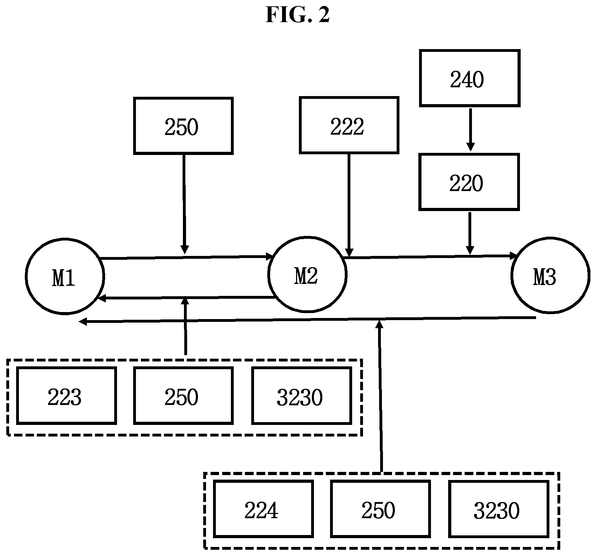

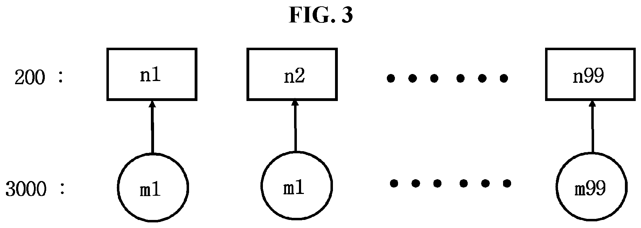

Example embodiments of the present invention are described in detail with reference to the appended drawings. FIG. 1 is a block diagram of an under-induction cooking system according to an embodiment of the present invention, FIG. 2 shows a process of switching modes among an OFF-mode, stand-by mode, and heating mode of an induction unit, and FIG. 3 shows induction units matching one-to-one with the respective pads of the induction units;

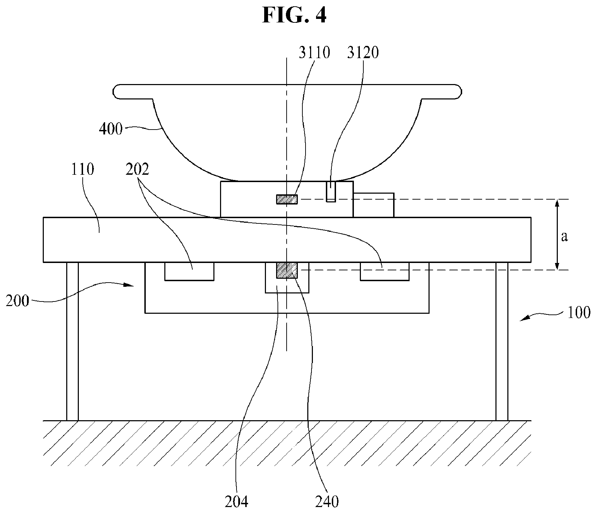

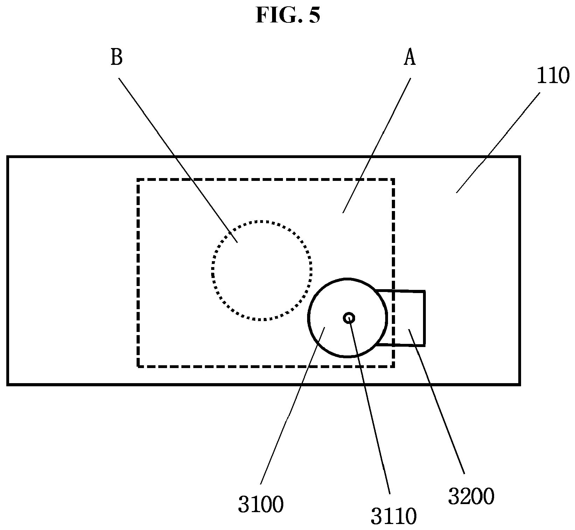

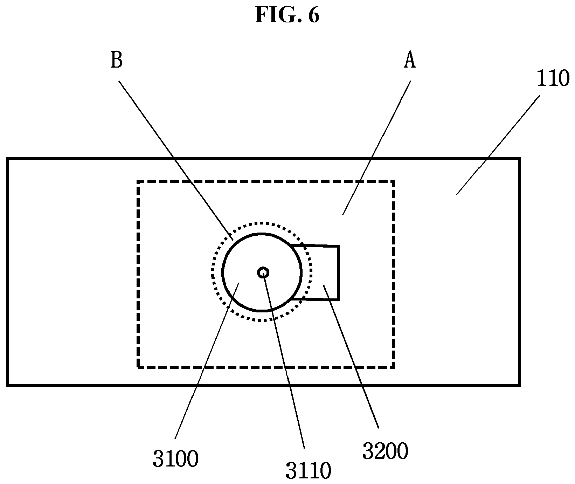

FIG. 4 shows a schematic structure of an under-induction cooking system according to an embodiment of the present invention, FIG. 5 shows a state where the pad of FIG. 4 is disposed within a detection area, and FIG. 6 shows a state where the pad of FIG. 4 is disposed within a switching area.

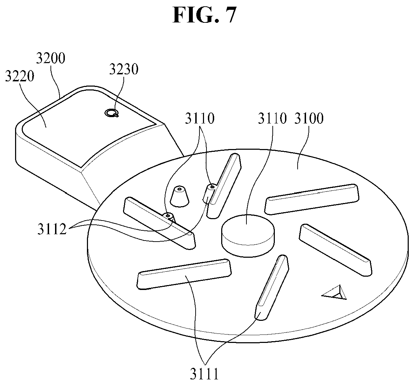

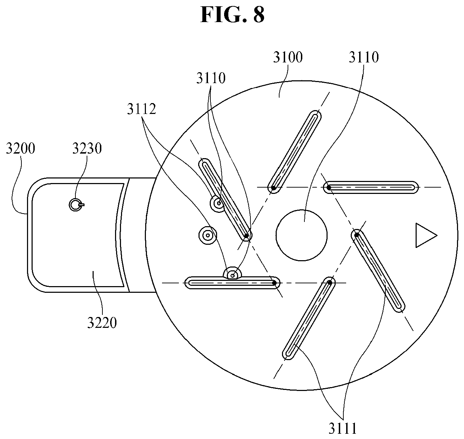

FIG. 7 is a perspective view of the pad of FIG. 4, and FIG. 8 is a plan view of FIG. 7.

Referring to FIGS. 1 to 8, an under-induction cooking system according to an embodiment of the present invention comprises a table 100, an induction unit 200, a pad 3000, a first identifier 210, a controller 220, a receiver 230, and the like, as defined in the claims. The present system further comprises a designated container 400 for induction heating.

The table 100 may include a frame, a top plate 110 coupled to an upper portion of the frame, and the like. As defined in the claims, the under-induction cooking system comprises one or more tables. The table 100 may indicate a plurality of tables placed in a space. The top plate 110 may be positioned at a predetermined height from the ground. The top plate 110 may be where the induction unit 200 is installed and may be a top plate of a general table or the like.

The top plate 110 is configured to transmit a magnetic field. The top plate 110 configured to transmit a magnetic field can be coupled to the table 100. To this end, the top plate 110 may be formed of a non-magnetic material selected from a group of marble, wood, glass or the like. In an embodiment, a top surface and bottom surface of the top plate 110 may be flat. In an embodiment, the top plate 110 may have a thickness in a preset range. The thickness of the top plate 110 may be changed based on the material of the top plate 110.

As defined in the claims, a detection area (A) is arranged in a preset area of an upper surface of the top plate. The detection area (A) may be arranged in a first area of the top surface of the top plate 110. The detection area (A) refers to a maximum area where the induction unit 200 is capable of detecting presence of the pad 3000 when the pad 3000 is placed on the top plate 110 of the table 100. The detection area (A) may be marked on the top surface of the top plate 110 as the first area of the top plate 110.

As defined in the claims, a switching area (B) is arranged in a preset area of an upper surface of the top plate. Also, the switching area (B) may be arranged in a second area of the top surface of the top plate 110. As defined in the claims, the switching area (B) is placed within the detection area (A). In other words, the detection area (A) includes the entire switching area (B). Although a shape of the switching area (B) may change based on a planar shape of the pad 3000, the switching area (B) may be circular-shaped. The switching area (B) may be marked on the top surface of the top plate 110. The induction unit 200 is set to receive power for heating when the pad 3000 is placed in the switching area (B). In other words, the mode of the induction unit 200 changes from a stand-by mode (M2) to a heating mode (M3).

The induction unit 200 may include a power supply portion 250. The power supply portion 250 may include a power button or ON/OFF button. As a result, when power of the induction unit 200 is turned on, the mode of the induction unit 200 changes from an OFF mode (M1) to the stand-by mode. According to the present system, when the mode of the induction unit 200 changes from the stand-by mode to the heating mode, the induction unit 200 may start heating operation with respect to the designated container 400. To change the mode of the induction unit 200 from the stand-by mode to the heating mode, a control signal by a mode change portion 222 may need to be generated in the induction unit 200. Moreover, a first sensor portion 240 may need to detect a magnetic field in a preset range. When power of the induction unit 200 is turned off, the mode of the induction unit 200 may change from the heating mode or the stand-by mode to the OFF mode.

The induction unit 200 may heat food in the designated container 400 using an indirect method where heat is induced in the designated container 400 itself by the magnetic field. The induction unit 200 according to one embodiment is fixedly installed under the top plate 110 to heat the designated container 400 positioned above the top plate 110. The induction unit 200 may transfer the magnetic field created by a circular coil 202 therein to the designated container 400 positioned above the top plate 110. Specifically, the induction unit 200 may include a case accommodating the circular coil 202, a coil base portion, the first identifier 210, the controller 220, the receiver 230, the first sensor portion 240, and the like.

In some embodiments, the circular coil 202 is disposed in a limited space inside the induction unit 200. As a result, it is necessary to maximize heating efficiency with respect to the designated container 400 by increasing the number of turns of the circular coil 202 per unit area according to an embodiment. To this end, the circular coil 202 may be wound on the coil base portion (not shown) a number of times to have a coaxial shape, and the circular coil 202 may be configured to have at least one or more layers. An empty space may be provided at a center of the circular coil 202.

In an embodiment, the coil base portion may be positioned near or to contact an inner surface of the upper portion of the case. This is because the present system is the under-induction cooking system where the induction unit 200 is disposed below the top plate 110 of the table 100. Consequently, the capability of induction heating by the induction unit 200 may be further improved.

In the present system, the induction unit 200 comprises the first sensor portion 240. The first sensor portion 240 detects the magnetic field generated by a magnet portion 3110, described below. In some embodiments, when the mode of the induction unit 200 changes from the stand-by mode to the heating mode, the first sensor portion 240 measures a linear distance (a) between the first sensor portion 240 and the magnet portion 3110 disposed in the pad 3000. When the measured distance is within a preset effective range, power supplied to the induction unit 200 may be adjusted based on the measured distance.

The magnetic field can be formed around the pad 3000 by the magnet portion 3110. In some embodiments, the first sensor portion 240 operates as a sensor by sensing a small amount of voltage created by reaction with the magnetic field and amplifying the voltage through a transistor. The first sensor portion 240 may measure the thickness of the top plate 110 using the pad 3000. In some embodiments, the first sensor portion 240 is placed in an inner space of the induction unit 200. Particularly, the first sensor portion 240 may be disposed at the center of the circular coil 202 in the inner space of the induction unit 200. The first sensor portion 240 may be close to or contact with the inner surface of the upper portion of the case. The circular coil 202 and the first sensor portion 240 may be positioned at a same height in the induction unit 200.

The first sensor portion 240 may be positioned vertically up or down from the center of the circular coil 202. In other words, the first sensor portion 240 may be disposed on a virtual straight line vertically passing the center of the circular coil 202. As such, the present system may be semi-permanently used by adopting the contactless first sensor portion 240.

The first sensor portion 240 according to one embodiment includes a hall sensor 241, analog-to-digital (A/D) conversion portion 242, and the like. The hall sensor 241 can detect the magnetic field of the magnet portion 3110. The hall sensor 241 can be a bipolar type and may detect the magnetic field by a north pole and a south pole, respectively. The hall sensor 241 may be connected to a printed circuit board via a wire or the like, as described below.

The A/D conversion portion 242 can convert a voltage measured by the hall sensor 241 to a digital value. The digital value may be transmitted to the induction unit 200 through a sender 3220. The induction unit 200 may calculate the digital value to convert the digital value into the linear distance (a) between the first sensor portion 240 and the magnet portion 3110. Based on the foregoing, the under-induction cooking system according to an embodiment may measure the thickness of the top plate 110. According to an embodiment, in consideration of the capability of the induction unit 200, the linear distance (a) between the first sensor portion 240 and the magnet portion 3110 may be in a range of 1milimeter (mm) and 60mm.

The first sensor portion 240 may be disposed in a circular storage portion 204 having an empty space therein. A lower portion and side portions of the circular storage portion 204 may be formed of a metallic shield member. The circular storage portion 204 may be disposed at the center of the circular coil 202 and fitted in the coil base portion. In an embodiment, the circular storage portion 204 may be disposed on the virtual straight line vertically passing through the center of the circular coil 202. An upper part of the side portions of the circular storage portion 204 may contact the inner surface of the upper portion of the case.

A unique or intrinsic key data being a first key data is set and stored in the first identifier 210 such that each induction unit 200 can be identified, as defined in the claims. The user may input to the first identifier 210 a preset first key data. The first key data may be any one of a mark, character, geometric form, and a combination thereof. The first key data may be visually displayed. As a result, the user may identify the induction unit 200. In an embodiment, the first key data may be a number, for instance. In other words, the induction unit 200 may be identified using the number. Also, as the induction unit 200 is installed in the table 100, the table 100 may be identified using the number.

The pad 3000 includes a second identifier 3210 where a second key data that matches one-to-one with the first key data may be set and stored, as defined in the claims. The second identifier 3210 may be formed on the printed circuit board of a main body portion 3200. The user may input to the second identifier 3210 a preset second key data. Herein, the second key data may be any one of a mark, character, geometric form, and any combination thereof in correspondence with the first key data. The second key data may be externally displayed, which allows the user to identify the pad 3000.

The first key data and the second key data are configured to match one-to-one with each other. Any one pad 3000 and any one induction unit 200 paired with the one pad 3000 may constitute one set. In this respect, it is easy to find any one pad 3000 that constitutes a set with a particular induction unit 200 in a plurality of the pads 3000. For instance, assume that 99 induction units 200 are disposed, and 99 pads constituting a set with their respective induction units 200 are present. In this instance, each induction unit may be provided with a first key data from n1 to n99. Also, the pad 3000 may be provided with a second key data from m1 to m99. The induction unit 200, n1, is assumed to match one-to-one with the pad 3000, m1. Similarly, the induction unit 200, n2, may match one-to-one with the pad 3000, m2.

The receiver 230 is electrically connected to the controller 220 and is configured to receive a radio frequency (RF) signal. The receiver 230 only receives the RF signal transmitted from any one pad 3000 that constitutes one set with the induction unit 200. When the receiver 2300 included in any one induction unit 200 of the plurality of the induction units 200 receives the RF signal, the receiver 230 may transmit an electrical signal to the controller 220 to display the first key data to the user. The RF signal transmitted from the pad 3000 may include the second key data.

The controller 220 generates a control signal that controls the induction unit 200. The controller 220 may be prepared using electrical wiring and circuit elements, such as a semiconductor, a condenser, a resistor, and the like, furnished on the printed circuit board. The controller includes the matching confirmation portion 221, the mode change portion 222, a matching reconfirmation portion 223, a container overheating monitoring portion 224, as defined in the claims.

The matching confirmation portion 221 checks whether the pad 3000 is positioned within the detection area (A). To be illustrated, in some embodiments, with the power of the induction unit 200 turned on, when any one of the induction units 200 receives the second key data, the matching confirmation portion 221 included in the induction unit 200 receiving the second key data checks whether the pad 3000 sending the second key data is positioned within the detection area (A) in a predetermined first limit time. The induction unit 200 receiving the second key data can refer to a particular induction unit 200 that is preset to match one-to-one with the second key data in the plurality of the induction units 200.

The pad 3000 may transmit the second key data through the sender 3220 using the RF signal. To this end, the user may turn on the pad 3000 by pushing a press button 3230. Then any one of the induction units 200 that matches one-to-one with the pad 3000 receives the RF signal through the receiver 230. When the induction unit 200 receives the RF signal, the induction unit 200 may immediately visually display the first key data. The user may then position the pad 3000 within the first limit time on the top plate 110 of the induction unit 200 that matches one-to-one with the second key data, particularly on the detection area (A) thereof.

In some embodiments, when the pad 3000 is positioned in the detection area (A) within the first limit time, the ON state, i.e., the pressed state of the pad 3000, is maintained. However, when the pad 3000 is positioned in the detection area (A) after the first limit time passes, the pressed state of the pad 3000 may be canceled. As the user presses the press button of the pad 3000 to again change to the ON state, the RF signal including the second key data needs to be sent again.

The mode change portion 222 converts the mode of the induction unit 200 from the stand-by mode to the heating mode. When the induction unit 200 is turned on by pressing the power button, the induction unit 200 may be placed in the stand-by mode. During this time, since power for heating is not supplied to the induction unit 200, the designated container 400 may not be heatable. To change the stand-by mode of the induction unit 200 to the heating mode, the user places the pad 3000 on the top plate 110 such that the magnet portion 3110 is positioned in the switching area (B).

In other words, when the pad 3000 is positioned on the top plate 110 such that the magnet portion 3110 is disposed within the switching area (B), the mode change portion 222 changes the stand-by mode to the heating mode for the induction unit 200, as defined in the claims. However, if the pad 3000 is positioned on the top plate 110 such that the magnet portion 3110 is disposed within the switching area (B), the mode of the induction unit 200 may change from the stand-by mode to the heating mode even though the pad 3000 is not the one that is paired with any one of the induction units 200.

The matching reconfirmation portion 223 cancels the heating mode when a temperature measured through the pad 3000 that matches one-to-one with the first key data (specifically, the second sensor portion 3120) is not greater than a preset first temperature within a predetermined second limit time elapsed from a first time point when the mode of the induction unit 200 is changed from the stand-by mode to the heating mode.

For instance, assume that the pad 3000 which matches one-to-one with the first induction unit being any one of the induction units 200 is indicated as a first pad. The first induction unit may change its mode from the stand-by mode to the heating mode by a second pad. The first sensor portion 240 may measure the linear distance between the first sensor portion 240 and the magnet portion 3110 disposed in the pad 3000. When the linear distance is in the predetermined effective range, the designated container 400 disposed on the first induction unit may be heated.

However, when the second pad is used, the first induction unit may not receive the temperature measured by the second sensor portion 3120 installed inside the second pad. This is because, as described above, the first induction unit and the first pad are exclusively paired, thereby enabling RF communication with each other.

Therefore, when a pad 3000 other than the pad 3000 that matches one-to-one with any one induction unit 200 is used and the mode of the induction unit 200 changes from the stand-by mode to the heating mode, the heating mode of the induction unit 200 may be canceled if the temperature measured by the second sensor portion 3120 of the pad 3000 that matches one-to-one therewith is not greater than the preset first temperature within the second limit time. In other words, the induction unit 200 may be placed in the OFF mode.

In some embodiments, the container overheating monitoring portion 224 monitors whether the temperature measured through the pad 3000 that matches one-to-one with the first key data is greater than a preset second temperature, thereby monitoring overheating of the designated container 400. The second temperature may be any value greater than 100 degrees Celsius. For example, when contents, such as water, is not present in the designated container 400, the designated container 400 may be overheated.

In other words, the controller 220 may change the mode of the induction unit 200 to the OFF mode by canceling the heating mode, in response to determining that the temperature measured by the pad 3000 that matches one-to-one with the first key data is greater than the second temperature, which may prevent safety accident caused by fire by overheating and the like.

The pads 3000 are provided in a same quantity as the number of the induction units 200 to form a pair with their respective induction units 200. In other words, the pad 3000 is paired one-to-one with the induction unit 200. In the present system, the pad 3000 may have a function of searching for an induction unit 200 (or a table on which the induction unit is installed) that matches one to one with the pad 3000. The pad 3000 may also switch the mode of the induction unit 200 from the standby mode to the heating mode. The pad 3000 may also measure the temperature of the designated container 400, stably place the designated container 400 on the upper surface thereof, check whether the induction unit 200 is in the standby mode, switch the mode of the induction unit 200 from the heating mode or the stand-by mode to the OFF mode, and the like. This may be done through one or more push buttons arranged in the pad 3000.

The pad 3000 includes a support portion 3100 and may further include the main body portion 3200. The support portion 3100 includes the magnet portion 3110 disposed at the exact center thereof and the second sensor portion 3120 that is exposed upward and measures the temperature of the designated container 400.

In some embodiments, the designated container 400 is seated on the support portion 3100. To this end, the support portion 3100 may be made of a material with low heat transfer rate and high heat resistance. For instance, the support portion 3100 may be formed of any material selected from a group of silicon, rubber, marble, wood, glass, and the like. The support portion 3100 according to an embodiment has a shape of a circular plate. An anti-slip portion made of a material with a high coefficient of friction may be protruded on the lower side of the support portion 3100 such that the pad 3000 may be stably placed on the top plate 110.

The magnet portion 3110 according to one embodiment protrudes upward from the upper surface of the support portion 3100 in the pad 3000, which allows the user to check the location of the magnet portion 3110. The magnet portion 3110 may form the magnetic field around the magnet portion 3110, and the first sensor portion 240 may detect the pad 3000 by sensing the magnetic field. The magnet portion 3110 may be a magnet with north and south poles provided at both ends of the magnet portion 3110. Moreover, lines of magnetic force, formed around the pad 3000 by the magnet portion 3110, may be in a form of connecting the upper and lower surfaces of the pad 3000. The magnet portion 3110 may be arranged such that the south pole faces the lower side of the pad 3000 when the north pole faces the upper side of the pad 3000, for example.

In an embodiment, a plurality of support protrusions 3111 disposed around the magnet portion 3110 in a predetermined pattern are formed on the upper surface of the support portion 3100. A support protrusion 3111 may be linear-shaped, and a lower end of the support protrusion 3111 may be coupled to the support portion 3100. The support protrusion 3111 may have a shape where a cross-sectional area of the support protrusion 3111 is gradually decreased vertically upward from the lower end of the support protrusion 3111. An upper surface of the support protrusion 3111 may be a flat surface. As a result, the designated container 400 may be stably positioned on the support protrusion 3111.

The support protrusion 3111 may be arranged in a predetermined pattern such that a front end of the support protrusion 3111 that is adjacent to the magnet portion 3110 is disposed in a counterclockwise direction to face a front end of another support protrusion 3111 directly adjacent thereto. In some embodiments, the plurality of the support protrusions 3111 are obliquely arranged at a predetermined inclination angle, with the magnet portion 3110 centered on the upper surface of the support portion 3100. Such an arrangement of the support protrusions 3111 may facilitate to smoothly emit heat generated in the designated container 400 placed on the pad 3000.

The second sensor portion 3120 may be placed on the support protrusion 3111. The second sensor portion 3120 according to one embodiment is disposed at a longitudinal midpoint of the support projection 3111. To this end, the support protrusion 3111 may include a receiving protrusion 3112. The receiving protrusion 3112 may be integrally formed at a side of the support projection 3111. The receiving protrusion 3112 may have an inner space in which the second sensor portion 3120 is accommodated. An upper side of the receiving protrusion 3112 may be open to expose the second sensor portion 3120. The second sensor portion 3120 may be exposed upward from the upper surface of the support portion 3100.

The second sensor portions 3120 may be disposed on at least two or more support protrusions 3111, respectively. This allows the temperature to be measured by another second sensor portion 3120 when one of the second sensor portions 3120 fails. Additionally, failure of the second sensor portions 3120 may be checked by comparing temperatures measured by each second sensor portion 3120.

In some embodiments, the main body portion 3200 extends from the support portion 3100 to a side of the support portion 3100. The printed circuit board electrically connected to the second sensor portion 3120 may be placed in the main body portion 3200. The sender 3220 that transmits an RF signal can be installed in the pad 3000. In particular, the sender 3220 may be disposed in the main body portion 3200 and is electrically connected to the printed circuit board.

When the user places the pad 3000 on the top plate 110 so that the magnet portion 3110 is disposed within the switching area (B), the induction unit 200 may use the measured value detected by the first sensor portion 240 to compute the distance between the first sensor portion 240 and the magnet portion 3110. When the measured value falls out of the preset range, the controller 220 may cut off power supplied to the circular coil 202. In an embodiment, when a distance (d2) between the circular coil 202 and the magnet portion 3110 exceeds a preset distance due to the thickness of the top plate 110, performance of the present system, as well as durability, may be deteriorated. If the measured value falls out of the preset range, the induction unit 200 may display an error code.

When the user places the pad 3000 on the top plate 110 so that the magnet portion 3110 is disposed outside the switching area (B), the controller 220 may discontinue power supplied to the circular coil 202 for heating.

If the power button arranged in the induction unit 200 is viewed as a first power switch, the pad 3000 may be viewed as a separate second power switch which dually controls power supplied to the circular coil 202 for safety in use. The mode change portion 222 of the controller 220 may supply power to the circular coil 202 with both the first power switch and the second power switch turned on. Furthermore, the matching reconfirmation portion 223 of the controller 220 may be viewed as a third power switch that cancels the heating mode of the induction unit 200 when the induction unit 200 and the pad 3000 are not one set that is matched with each other. Besides, the container overheating monitoring portion 224 of the controller 220 may be viewed as a fourth power switch for safety in use by monitoring overheating of the designated container 400. Based on these structures, the present system can ensure multiple levels of safety in use.

## Claims

1. An under-induction cooking system having enhanced safety using a smart pad, the system comprising:
one or more tables (100) disposed in a space, wherein each table includes a top plate (110) configured to transmit a magnetic field;
one or more induction units (200) fixed under each table, wherein each induction unit is configured to heat a designated container (400) disposed above the top plate; and
one or more pads (3000), wherein each pad includes a sender (3220) transmitting a radio frequency (RF) signal, wherein the number of pads correspond to the number of induction units such that the pads are paired with the respective induction units,
wherein each induction unit includes:
a first identifier (210), wherein a unique first key data is set and stored in the first identifier to identify each induction unit;
a controller (220) generating a control signal which controls the induction unit; and
a receiver (230) electrically connected to the controller and receiving the RF signal, **characterized in that**.
wherein the pad includes a support portion (3100) including a magnet portion (3110) disposed at a center of the magnet portion and a second sensor portion (3120) exposed to an upper side of the support portion and measuring a temperature of the designated container,
wherein the induction unit includes a first sensor portion (240) detecting a magnetic field generated by the magnet portion,
wherein the pad includes a second identifier (3210), wherein a second key data that matches one-to-one with the first key data is set and stored in the second identifier,
wherein the receiver is configured to receive only the RF signal transmitted from the one pad paired with the induction unit as a set,
wherein a detection area (A) is arranged in a preset area of an upper surface of the top plate, wherein the controller includes a matching confirmation portion (221) checking whether the pad is positioned within the detection area,
wherein a switching area (B) is arranged in a preset area of an upper surface of the top plate, wherein, when the pad is disposed on the top plate such that the magnet portion is placed within the switching area, a mode change portion (222) of the controller is configured to change a mode of the induction unit from a stand-by mode to a heating mode,
wherein the detection area is defined as a maximum area where the induction unit is capable of detecting presence of the pad when the pad is placed on the top plate of the table, wherein the switching area is positioned within the detection area,
wherein, in response to determining that a temperature measured by the pad that matches one-to-one with the first key data is not greater than a preset first temperature within a preset second limit time elapsed from a first time point when the mode of the induction unit changes from the stand-by mode to the heating mode, a matching reconfirmation portion (223) of the controller is configured to cancel the heating mode.

2. The system of claim 1, wherein the pad includes:
a main body portion (3200) extending to one side of the support portion from the support portion and including a printed circuit board electrically connected to the second sensor portion.

3. The system of claim 1, wherein the first key data is any one of a mark, character, geometric form, and a combination thereof and the first key data is visually displayed.

4. The system of claim 1, wherein:
in a state where the one or more induction units are all turned on, when a first induction unit of the one or more induction units receives the second key data,
the matching confirmation portion included in the first induction unit which has received the second key data is configured to check whether the pad which has sent the second key data is positioned in the detection area within a preset first limit time.

5. The system of claim 1, wherein the controller includes a container overheating monitoring portion monitoring (224) whether a temperature measured by the pad that matches one-to-one with the first key data exceeds a preset second temperature to determine overheating of the designated container.

6. The system of claim 5, wherein the controller is configured to cancel a heating mode and change the heating mode to OFF mode, in response to determining that the temperature measured by the pad that matches one-to-one with the first key data exceeds the second temperature.

## Patentansprüche

1. Unterseitiges Induktionskochsystem mit verbesserter Sicherheit unter Verwendung eines intelligenten Pads, wobei das System umfasst:
einen oder mehrere Tische (100), die in einem Raum angeordnet sind, wobei jeder Tisch eine obere Platte (110) umfasst, die dazu eingerichtet ist, ein Magnetfeld zu übertragen;
eine oder mehrere Induktionseinheiten (200), die unter jedem Tisch befestigt sind, wobei jede Induktionseinheit dazu eingerichtet ist, einen zugeordneten Behälter (400) zu erhitzen, der über der oberen Platte angeordnet ist; und
ein oder mehrere Pads (3000), wobei jedes Pad einen Sender (3220) umfasst, der ein Hochfrequenz-, RF-, Signal überträgt, wobei die Anzahl der Pads der Anzahl der Induktionseinheiten entspricht, sodass die Pads mit den jeweiligen Induktionseinheiten gekoppelt sind,
wobei jede Induktionseinheit Folgendes umfasst:
eine erste Kennung (210), wobei eindeutige erste Schlüsseldaten in der ersten Kennung festgelegt und gespeichert sind, um jede Induktionseinheit zu identifizieren;
eine Steuerung (220), die ein Steuersignal erzeugt, welches die Induktionseinheit steuert; und
einen Empfänger (230), der elektrisch mit der Steuerung verbunden ist und das RF-Signal empfängt,
**dadurch gekennzeichnet, dass**
das Pad einen Stützabschnitt (3100) umfasst, der einen Magnetabschnitt (3110), der in einer Mitte des Magnetabschnitts angeordnet ist, und einen zweiten Sensorabschnitt (3120) umfasst, der zu einer Oberseite des Stützabschnitts freiliegt und eine Temperatur des zugeordneten Behälters misst,
die Induktionseinheit einen ersten Sensorabschnitt (240) umfasst, der ein durch den Magnetabschnitt erzeugtes Magnetfeld erfasst,
das Pad eine zweite Kennung (3210) umfasst, wobei zweite Schlüsseldaten, die eins-zu-eins mit den ersten Schlüsseldaten übereinstimmen, in der zweiten Kennung festgelegt und gespeichert sind,
der Empfänger dazu eingerichtet ist, nur das RF-Signal zu empfangen, das vom einen Pad übertragen wird, das mit der Induktionseinheit als ein Set gekoppelt ist,
wobei ein Erfassungsbereich (A) in einem voreingestellten Bereich einer oberen Fläche der oberen Platte angeordnet ist, wobei die Steuerung einen Abschnitt zur Übereinstimmungsbestätigung (221) umfasst, der prüft, ob das Pad innerhalb des Erfassungsbereichs positioniert ist,
wobei ein Schaltbereich (B) in einem voreingestellten Bereich einer oberen Fläche der oberen Platte angeordnet ist, wobei, wenn das Pad so auf der oberen Platte angeordnet ist, dass der Magnetabschnitt innerhalb des Schaltbereichs angeordnet ist, ein Abschnitt zur Modusänderung (222) der Steuerung dazu eingerichtet ist, einen Modus der Induktionseinheit von einem Bereitschaftsmodus in einen Heizmodus zu ändern,
wobei der Erfassungsbereich als ein maximaler Bereich definiert ist, in dem die Induktionseinheit in der Lage ist, eine Anwesenheit des Pads zu erfassen, wenn das Pad auf der oberen Platte des Tisches angeordnet ist, wobei der Schaltbereich innerhalb des Erfassungsbereichs positioniert ist,
wobei, als Reaktion auf die Feststellung, dass eine durch das Pad, das eins-zu-eins mit den ersten Schlüsseldaten übereinstimmt, gemessene Temperatur innerhalb einer voreingestellten zweiten Grenzzeit, die ab einem ersten Zeitpunkt verstrichen ist, an dem sich der Modus der Induktionseinheit vom Bereitschaftsmodus in den Heizmodus ändert, nicht größer als eine voreingestellte erste Temperatur ist, ein Abschnitt zur erneuten Übereinstimmungsbestätigung (223) der Steuerung dazu eingerichtet ist, den Heizmodus abzubrechen.

2. System nach Anspruch 1, wobei das Pad Folgendes umfasst:
einen Hauptkörperabschnitt (3200), der sich vom Stützabschnitt zu einer Seite des Stützabschnitts erstreckt und eine Leiterplatte umfasst, die elektrisch mit dem zweiten Sensorabschnitt verbunden ist.

3. System nach Anspruch 1, wobei die ersten Schlüsseldaten eines von einer Markierung, einem Zeichen, einer geometrischen Form und einer Kombination davon sind und die ersten Schlüsseldaten visuell angezeigt werden.

4. System nach Anspruch 1, wobei:
in einem Zustand, in dem die eine oder mehreren Induktionseinheiten alle eingeschaltet sind, wenn eine erste Induktionseinheit der einen oder mehreren Induktionseinheiten die zweiten Schlüsseldaten empfängt, der Abschnitt zur Übereinstimmungsbestätigung, der in der ersten Induktionseinheit enthalten ist, die die zweiten Schlüsseldaten empfangen hat, dazu eingerichtet ist, zu prüfen, ob das Pad, das die zweiten Schlüsseldaten gesendet hat, innerhalb einer voreingestellten ersten Grenzzeit im Erfassungsbereich positioniert ist.

5. System nach Anspruch 1, wobei die Steuerung einen Abschnitt zur Überwachung der Behälterüberhitzung (224) umfasst, der überwacht, ob eine durch das Pad, das eins-zu-eins mit den ersten Schlüsseldaten übereinstimmt, gemessene Temperatur eine voreingestellte zweite Temperatur überschreitet, um eine Überhitzung des zugeordneten Behälters festzustellen.

6. System nach Anspruch 5, wobei die Steuerung dazu eingerichtet ist, als Reaktion auf die Feststellung, dass die durch das Pad, das eins-zu-eins mit den ersten Schlüsseldaten übereinstimmt, gemessene Temperatur die zweite Temperatur überschreitet, einen Heizmodus abzubrechen und den Heizmodus in einen AUS-Modus zu ändern.

## Revendications

1. Système de cuisson à induction intégré doté d'une sécurité renforcée grâce à une tablette connectée, le système comprenant:
une ou plusieurs tables (100) disposées dans un espace, chaque table comprenant un plateau supérieur (110) conçu pour transmettre un champ magnétique;
une ou plusieurs unités à induction (200) fixées sous chaque table, chaque unité à induction étant conçue pour chauffer un récipient désigné (400) placé au-dessus du plateau supérieur; et
une ou plusieurs pastilles (3000), chaque pastille comprenant un émetteur (3220) qui émet un signal radiofréquence (RF), le nombre de pastilles correspondant au nombre d'unités d'induction, de sorte que les pastilles sont appariées avec les unités d'induction respectives,
dans lequel chaque unité d'induction comprend:
un premier identifiant (210), dans lequel des premières données de clé unique sont définies et stockées dans le premier identifiant afin d'identifier chaque unité d'induction;
un contrôleur (220) générant un signal de commande qui commande l'unité d'induction; et
un récepteur (230) connecté électriquement au contrôleur et recevant le signal RF, **caractérisé en ce que**
dans lequel la pastille comprend une partie support (3100) comportant une partie aimant (3110) disposée au centre de la partie aimant et une deuxième partie capteur (3120) apparente sur la face supérieure de la partie support et mesurant la température du récipient désigné,
dans lequel l'unité d'induction comprend une première partie capteur (240) détectant un champ magnétique généré par la partie aimant,
dans lequel la pastille comprend un deuxième identifiant (3210), dans lequel des deuxièmes données de clé, qui correspondent un pour un aux premières données de clé, sont définies et stockées dans le deuxième identifiant,
dans lequel le récepteur est conçu pour recevoir uniquement le signal RF émis par la pastille appariée avec l'unité d'induction en tant qu'ensemble,
dans lequel une zone de détection (A) est disposée dans une zone prédéfinie de la surface supérieure de la plaque supérieure, dans lequel le contrôleur comprend une partie de confirmation de correspondance (221) qui vérifie si la pastille est positionnée à l'intérieur de la zone de détection,
dans lequel une zone de commutation (B) est disposée dans une zone prédéfinie de la surface supérieure de la plaque supérieure dans lequel, lorsque la pastille est disposée sur la plaque supérieure de telle sorte que la partie aimant se trouve à l'intérieur de la zone de commutation, une partie de changement de mode (222) du contrôleur est conçue pour faire passer l'unité d'induction d'un mode veille à un mode chauffage,
dans lequel la zone de détection est définie comme la zone maximale dans laquelle l'unité d'induction peut détecter la présence de la pastille lorsque la pastille est placée sur la plaque supérieure de la table, et dans lequel la zone de commutation est située à l'intérieur de la zone de détection,
dans lequel, lorsqu'il est déterminé qu'une température mesurée par la pastille, qui correspond exactement aux premières données de base, n'est pas supérieure à une première température prédéfinie dans une deuxième durée prédéfinie écoulée depuis un premier point temporel où le mode de l'unité d'induction passe du mode veille au mode chauffage, une partie de reconfirmation de correspondance (223) du contrôleur est configurée pour annuler le mode chauffage.

2. Système selon la revendication 1, dans lequel la pastille comprend:
une partie de corps principal (3200) s'étendant vers le côté de la partie de support à partir de cette dernière et comprenant une carte de circuit imprimé connectée électriquement à la deuxième partie capteur.

3. Système selon la revendication 1, dans lequel les premières données de base correspondent à un signe, un caractère, une forme géométrique ou leur combinaison, et s'affichent visuellement.

4. Système selon la revendication 1, dans lequel:
dans un état où la ou les unités d'induction sont toutes allumées, lorsqu'une première unité d'induction parmi la ou les unités d'induction reçoit les deuxièmes données de base,
la partie de confirmation de correspondance incluse dans la première unité d'induction qui a reçu les deuxièmes données de base est configurée pour vérifier si la pastille qui a envoyé les deuxièmes données de base se trouve dans la zone de détection dans un premier temps limite prédéfini.

5. Système selon la revendication 1, dans lequel le contrôleur comprend une partie de surveillance de surchauffe de récipient (224) qui vérifie si une température mesurée par la pastille qui correspondant un pour un aux premières données de base, dépasse une deuxième température prédéfinie afin de déterminer la surchauffe du récipient désigné.

6. Système selon la revendication 5, dans lequel le contrôleur est configuré pour annuler un mode de chauffage et passer en mode Arrêt, lorsqu'il est déterminé que la température mesurée par la pastille correspondant un pour un aux premières données de base dépasse la deuxième température.
